# EUROPEAN PATENT SPECIFICATION

(11) **EP 3 549 836 B1**
(45) Date of publication and mention of the grant of the patent: **17.03.2021**
(21) Application number: 18203902.4
(22) Date of filing: 01.11.2018
(51) Int. Cl.: B60T 13/66, B60T 13/68, B60T 17/00, B01D 53/26, F24F 11/00

(54) **A METHOD FOR CONTROLLING AN AIR PROCESSING SYSTEM**
VERFAHREN ZUR STEUERUNG EINES LUFTVERARBEITUNGSSYSTEMS
PROCÉDÉ POUR COMMANDER UN SYSTÈME DE TRAITEMENT DE L'AIR

(30) Priority: 09.11.2017 SE 1751385
(43) Date of publication of application: 09.10.2019
(73) Proprietor: Scania CV AB, 151 87 Södertälje (SE)
(72) Inventor: HELLSTRAND, Richard, 152 57 Södertälje (SE); FELLKE, Martin, 117 58 Stockholm (SE); JOHANSSON, David, 126 55 Hägersten (SE)
(74) Representative: Scania CV AB

(56) References cited:
- WO-A1-93/03822
- WO-A1-02/096732
- WO-A1-2015/028534
- DE-T5-112015 002 184
- US-A- 6 125 553
- US-A1- 2014 116 534

## Description

### TECHNICAL FIELD

The invention relates to a method for controlling an air processing system according to the preamble of claim 1. The invention also relates to a system for controlling an air processing system. The invention also relates to a vehicle. The invention also relates to a computer program and a computer readable medium.

### BACKGROUND ART

Vehicles such as heavy vehicles are usually equipped with a so called air processing system to which compressed air is distributed by means of a compressor operated by a drive member such as a combustion engine, an electric motor or the like. The air processing system is arranged to distribute compressed air to compressed air systems of the vehicle such as e.g. the air suspension system and the brake system of the vehicle. The air processing system comprises an air dryer for drying and filtering the air from particles from e.g. oil from the engine. The compressor is connected to the air dryer via a feeding line. The air dryer comprises a desiccant cartridge and a support member having a purge valve for venting air during regeneration of the air dryer cartridge to recover drying performance of the air dryer cartridge.

When compressed air is produced in a moist environment during cold weather conditions, i.e. around 0 degree Celsius, there is a potential risk that freezing occurs in the purge valve of the air processing system. Freezing of the purge valve leads to decreased ability for the air processing system to exhaust moist air from the air dryer cartridge, which leads to decreased or no recovery of drying performance. Air dryer cartridge will be saturated with moisture if not recovered properly. With saturated cartridges there is a risk that moisture passes through the cartridge to other parts of the vehicle compressed air system which can lead to e.g. freezing in the service braking system, leading to reduced or at worst completely loss of braking performance.

A solution to this problem is to apply a electric heating coil in connection to the purge valve in order to prevent freezing of the purge valve during cold conditions. A problem with this solution is that it is unreliable in that there is a risk that the electric heating coil may brake due to e.g. vehicle vibrations during drive of the vehicle Such an arrangement is described in DE 11 2015 002184 T5.

Another solution to this problem is to provide a control strategy during cold conditions in which the air processing system increases the duty cycle of the compressor. This results in that the housing area of the purge valve will be heated by the warm compressed air and freezing of the purge valve is thereby prevented. The increased duty cycle of the compressor is achieved by opening the purge valve and release compressed air from the compressor to atmosphere. This control strategy results in increased energy consumption during cold weather conditions due to the increased compressor duty cycle and hence increased operation of the compressor.

### OBJECTS OF THE INVENTION

An object of the present invention is to provide a method for controlling an air processing system so that freezing of a purge valve of an air dryer device of said air processing system is reliably and efficiently prevented.

Another object of the present invention is to provide a system for controlling an air processing system so that freezing of a purge valve of an air dryer device of said air processing system is reliably and efficiently prevented.

### SUMMARY OF THE INVENTION

These and other objects, apparent from the following description, are achieved by a method, a system, a vehicle, a computer program and a computer readable medium as set out in the appended independent claims. Preferred embodiments of the method and system are defined in appended dependent claims.

Specifically an object of the invention is achieved by a method for controlling an air processing system of a vehicle. Said air processing system comprises an air dryer device configured to dry compressed air from a compressor operable by means of a drive member. Said air dryer device comprises an air dryer cartridge for said drying of compressed air. Said dried compressed air is configured to be distributed to vehicle systems during a compressor activation event. Said air dryer device further comprises a purge valve for venting air during regeneration of the air dryer cartridge by means of dried compressed air. The method comprises the steps of: determining the temperature associated with said purge valve by means of temperature determination means; if said temperature is below a predetermined temperature value, performing regeneration after a compressor activation event so that moist in connection to said purge valve is removed.

Hereby freezing of the purge valve of said air dryer device of said air processing system is reliably and efficiently prevented in that no heating of the purge valve and the surrounding of the purge valve is required. Thus, energy consumption, e.g. fuel consumption, is hereby decreased in that the compressor does not need to be used for heating the purge valve and its surrounding. Further, no electric heating coil arranged in connection to the purge valve is needed, thus eliminating risk of such electric heating coil braking down, wherein a more reliable prevention of freezing of said purge valve is obtained.

The method thus comprises the step of determining if said temperature is below a predetermined temperature value.

The method thus also comprises the step of determining if a compressor activation event has occurred.

Thus, if a compressor activation event has occurred and the temperature has been determined to be below a predetermined temperature value, regeneration is performed so that moist in connection to said purge valve is removed. Thus, said regeneration is performed to such an extent that the purge valve and its surrounding after said regeneration is dry.

If said temperature is determined not to be below said predetermined temperature value a predetermined regeneration strategy is maintained. Said predetermined regeneration strategy may be any suitable regeneration strategy. Said predetermined regeneration strategy may be a regeneration strategy where regeneration is not performed after every compressor activation event.

If no compressor activation event has occurred no regeneration will be performed and determination whether the temperature is below said predetermined temperature value will continue.

Thus, the method comprises the step of maintaining a predetermined regeneration strategy if it is determined that said predetermined temperature value is not below said predetermined temperature value.

Said predetermined temperature value may be any suitable temperature value which may pose a risk for freezing of said purge valve. Said temperature value may depend on other weather circumstances, such as degree of moist in the atmosphere/ air in the surroundings of said vehicle. Said predetermined temperature value may be about 2 degrees Celsius.

The step of performing regeneration after a compressor activation event so that moist in connection to said purge valve is removed is, according to an embodiment, performed essentially immediately after said compressor activation event. The step of performing regeneration after a compressor activation event so that moist in connection to said purge valve is removed is, according to an embodiment, performed in connection to deactivation of said compressor. The method thus comprises the step of detecting deactivation of the compressor.

Thus, the present invention relates to a method for controlling an air processing system for preventing freezing of a purge valve of the air dryer device of said air processing system.

According to an embodiment the method comprises the step of determining the degree of moist in said air dryer device, wherein the step of performing regeneration after a compressor activation event so that moist in connection to said purge valve is removed is performed based on said determined degree of moist in said air dryer device. By thus determining the degree of moist in said air dryer device, information about required regeneration in order to sufficiently dry said purge valve and the surrounding of said purge valve is efficiently obtained.

According to an embodiment of the method, the step of determining the degree of moist in said air dryer device comprises the step of determining compressor activation time during a compressor activation event; and determining amount of compressed air having passed said air dryer cartridge during said compressor activation time. Hereby the degree of moist in said air dryer device may be easily and efficiently determined.

The step of determining compressor activation time during a compressor activation event may be performed by any suitable means for determining activation time of a compressor. When the compressor is coupled to the drive member via a clutch arrangement, the step of determining compressor activation time may comprise the step of determining engagement time of said clutch arrangement, which may be performed by means of any suitable sensor. The step of determining compressor activation time during a compressor activation event may comprise the step of determining pressure of said compressed air from said compressor for determining the time said air pressure was over a predetermined pressure value. The step of determining pressure of said compressed air from said compressor may be performed by means of any suitable pressure sensor.

According to an embodiment of the method, the step of determining the degree of moist in said air dryer device comprises the step of detecting the degree of moist in said air dryer device by means of one or more suitable moist sensors arranged in an air dryer cartridge of said air dryer device.

According to an embodiment the method comprises the step of, prior to performing regeneration after a compressor activation event, determining amount of dried compressed air required during said regeneration so that moist in connection to said purge valve is removed based on said determined degree of moist in said air dryer device, wherein the step of performing regeneration after a compressor activation event is performed so that said required amount of dried compressed air is used for said regeneration. By thus determining the amount of dried compressed air required during said regeneration so that moist in connection to said purge valve is removed, information about required regeneration in order to sufficiently dry said purge valve and the surrounding of said purge valve is efficiently obtained.

According to an embodiment of the method, said step of performing said regeneration so that said required amount of dried compressed air is used for said regeneration comprises the following steps of. Performing a regeneration event until the air pressure of said dried compressed air has been reduced to a predetermined pressure level. Determining whether said required amount of dried compressed air has been used. If said required amount of dried compressed air has been used for said regeneration, said regeneration performance is terminated. If said required amount of dried compressed air has not been used for said regeneration, a regeneration continuation is performed comprising. Said regeneration continuation comprises the following steps: Closing said purge valve. Performing a compressor activation event so as to increase the pressure of said compressed dried air to a predetermined pressure. Performing another regeneration event until the air pressure of said dried compressed air has been reduced to a predetermined pressure level. Said regeneration continuation is repeated until said required amount of dried compressed air has been used for said regeneration. Hereby an efficient way of using the amount of dried compressed air required during said regeneration so that moist in connection to said purge valve is removed is obtained.

According to an embodiment, the method comprises the step of, prior to performing said regeneration, during a compressor activation event, adapting the pressure of said compressed dried air distributed to vehicle systems during said compressor activation event based on the activation time of said compressor activation event so that, during regeneration when said air pressure of said dried compressed air has been reduced to a predetermined pressure level, said required amount of dried compressed air has been used for said regeneration so that moist in connection to said purge valve is removed. Hereby an alternative efficient way of using the amount of dried compressed air required during said regeneration so that moist in connection to said purge valve is removed is obtained.

Specifically, an object of the invention is achieved by a system for controlling an air processing system of a vehicle. Said air processing system comprises an air dryer device configured to dry compressed air from a compressor operable by means of a drive member. Said air dryer device comprises an air dryer cartridge for said drying of compressed air. Said dried compressed air is configured to be distributed to vehicle systems during a compressor activation event. Said air dryer device further comprises a purge valve for venting air during regeneration of the air dryer cartridge by means of dried compressed air. The system comprises temperature determination means for determining the temperature associated with said purge valve; means for determining if said temperature is below a predetermined temperature value; means for determining a compressor activation event; and regeneration performance means arranged to perform regeneration after a determined compressor activation event if said temperature is determined to be below said predetermined temperature value so that moist in connection to said purge valve is removed.

According to an embodiment, the system comprises moist determination means arranged to determine the degree of moist in said air dryer device, wherein said regeneration performance means is arranged to perform said regeneration based on said determined degree of moist in said air dryer device.

According to an embodiment of the system, said moist determination means for determining the degree of moist in said air dryer device comprises compressor activation time determination means for determining compressor activation time during a compressor activation event; and means for determining amount of compressed air having passed said air dryer cartridge during said compressor activation time.

According to an embodiment, the system comprises determining means for determining amount of dried compressed air required during said regeneration so that moist in connection to said purge valve is removed based on said determined degree of moist in said air dryer device prior to performing regeneration after a compressor activation event, wherein said regeneration performance means is arranged to perform said regeneration so that said required amount of dried compressed air is used for said regeneration.

According to an embodiment of the system, said regeneration performance means is arranged to perform said regeneration so that said required amount of dried compressed air is used for said regeneration comprises: regeneration event performance means for performing a regeneration event until the air pressure of said dried compressed air has been reduced to a predetermined pressure level; means for determining whether said required amount of dried compressed air has been used; means for terminating said regeneration performance if said required amount of dried compressed air has been used for said regeneration; and, if said required amount of dried compressed air has not been used for said regeneration, regeneration continuation performance means comprising: means for closing said purge valve, compressor activation event performance means for performing a compressor activation event so as to increase the pressure of said compressed dried air to a predetermined pressure, and said regeneration event performance means for performing another regeneration event until the air pressure of said dried compressed air has been reduced to a predetermined pressure level; said regeneration continuation performance means being arranged to repeat said regeneration continuation performance until said required amount of dried compressed air has been used for said regeneration.

According to an embodiment, the system comprises pressure adaption means arranged to, prior to performing said regeneration and during a compressor activation event, adapt the pressure of said compressed dried air distributed to vehicle systems during said compressor activation event based on the activation time of said compressor activation event so that, during regeneration when said air pressure of said dried compressed air has been reduced to a predetermined pressure level, said required amount of dried compressed air has been used for said regeneration so that moist in connection to said purge valve is removed.

The system for controlling an air processing system of a vehicle is adapted to perform the method as set out herein.

The system according to the invention has the advantages according to the corresponding method.

Specifically an object of the invention is achieved by a vehicle comprising a system as set out herein.

Specifically an object of the invention is achieved by a computer program for controlling an air processing system of a vehicle, said computer program comprising program code which, when run on an control arrangement or another computer connected to the control arrangement, causes the control arrangement to perform the steps according to claim 1-6.

Specifically an object of the invention is achieved by a computer readable medium comprising instructions which, when executed by a computer, cause the computer to carry out the method a set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a side view of a vehicle according to the present invention;
Fig. 2 schematically illustrates a drive member operating a compressor connected to an air processing system of a vehicle according to an embodiment of the present invention;
Fig. 3a schematically illustrates an air processing system of a vehicle according to an embodiment of the present invention;
Fig. 3b schematically illustrates a bottom view of a an air dryer cartridge of an air dryer device of the air processing system in fig. 3a according to an embodiment of the present invention;
Fig. 4 schematically illustrates a system for controlling an air dryer device of an air processing system according to an embodiment of the present invention;
Fig. 5 schematically illustrates a flow chart of a method for controlling an air dryer device of an air pressure system according to an embodiment of the present invention; and
Fig. 6 is a block diagram schematically illustrating a computer according to an embodiment of the present invention.

### DETAILED DESCRIPTION

Hereinafter the term "link" refers to a communication link, which may be a physical connector, such as an optoelectronic communication wire, or a non-physical connector such as a wireless connection, for example a radio or microwave link.

Hereinafter the term "compressor activation event" refers to operating the compressor for providing compressed air, the term "compressor activation event" referring to a duty cycle of a compressor.

Hereinafter the term "temperature associated with the purge valve" refers to the temperature which may affect the purge valve if it is below a certain temperature level. The term "temperature associated with the purge valve" may refer to the external temperature in connection to a vehicle comprising an air processing system having an air dryer device with a purge valve for venting air during regeneration and/or the temperature directly in connection to such a purge valve. Thus the term "temperature associated with the purge valve" may refer to the external temperature, i.e. outdoor temperature, relative to the vehicle which may be detected by means of one or more temperature sensors on the vehicle, the temperature in connection to the purge valve and its environment being affected, i.e. associated, with said external temperature.

Hereinafter the term "air dryer cartridge" refers to any suitable configuration for drying compressed air in an air dryer device.

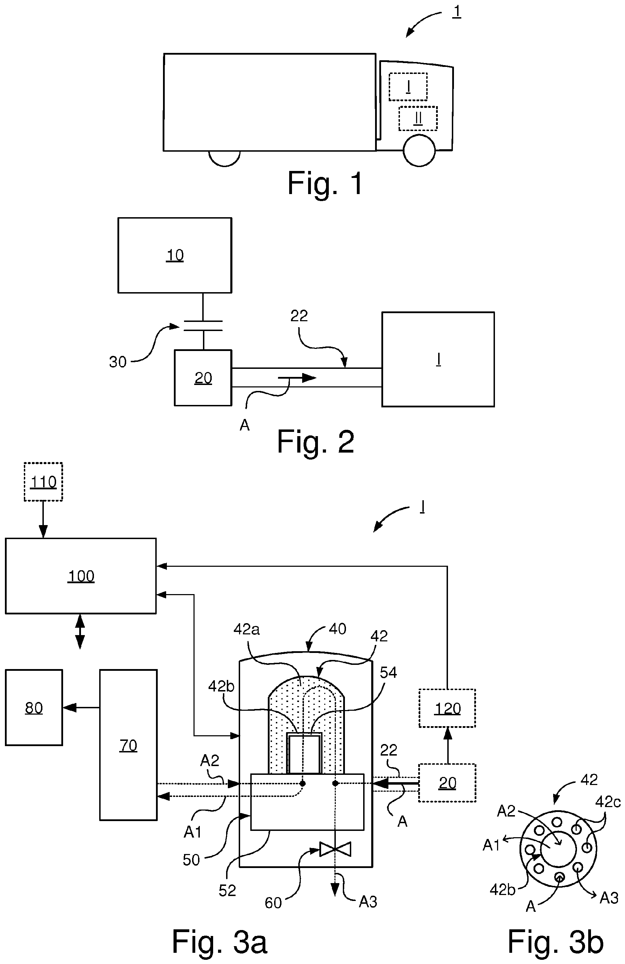

Fig. 1 schematically illustrates a side view of an exemplified vehicle 1 according to the present invention. The exemplified vehicle 1 is a heavy vehicle in the shape of a truck. The vehicle according to the present invention could be any vehicle such as a bus or a car. The vehicle comprises an air processing system I according to the present invention. The vehicle comprises a system II for controlling the air processing system of said vehicle 1.

Fig. 2 schematically illustrates a drive member 10 operating a compressor 20 connected to an air processing system I of a vehicle, for example a vehicle 1 in accordance with the vehicle in fig. 1. The drive member 10 may be any suitable drive member 10. The drive member 10 is according to an embodiment an internal combustion engine. The drive member 10 is according to an embodiment an electric motor. The drive member 10 may according to an embodiment be an energy source such as a battery unit.

The air processing system I is configured to receive compressed air A distributed by means of the compressor 20 operated by the drive member 10. The compressor 20 is connected to the air processing system via a feeding line 22 via which said compressed air A is arranged to be fed to the air processing system I.

The compressor 20 is operably connected to the drive member 10. The compressor 20 is according to this embodiment operably connected to the drive member 10 via a clutch arrangement 30. The compressor 20 is according to an alternative embodiment connected to the drive member via a gear arrangement (not shown). The compressor 20 is according to an alternative embodiment directly connected to an axle of the drive member (not shown), said drive member here being an electric motor.

Fig. 3a schematically illustrates an air processing system I of a vehicle according to an embodiment of the present invention.

The air processing system I comprises an air dryer device 40 for drying and filtering the air from particles from e.g. oil from an engine. The air dryer device 40 comprises an air dryer cartridge 42 for said drying of compressed air. The air dryer device 40 comprises a support member 50.

The cartridge 42 comprises a container portion 42a for air drying and a recess portion 42b. The container portion 42a may comprise any suitable material/materials for said air drying, i.e. a material or a mixture of materials configured to absorb liquid/fluid, e.g. water. The container portion 42a may thus be filled with one or more desiccant materials. The container portion 42a is according to an embodiment filled with a desiccant bed of silica gel balls for said air drying. The cartridge 42 may also be named desiccant cartridge.

The support member 50 has a body portion 52 and a protrusion 54 arranged to be fitted into said recess portion 42b for application of the cartridge 42 onto said support member 50. The support member 50 is according to a variant called air dryer body.

The air dryer device 40 also comprises a purge valve 60. Said purge valve 60 is configured to exhaust moist collected by the cartridge 42 of the air dryer device 40. Said purge valve 60 is according to an embodiment a part of the support member 50 and thus comprised in the support member 50. Said purge valve 60 is arranged for venting air from the cartridge 42. The cartridge 42 is connected to the purge valve 60. The purge valve 60 is arranged to vent air by regeneration where air and moist collected by the filter of a cartridge 42 of the air dryer device 40 is exhausted. The purge valve 60 is connected to the atmosphere and hence atmospheric pressure.

Said air dryer device 40 is configured to dry compressed air A from a compressor 20 operable by means of a drive member (see figure 2), not shown. Said dried compressed air A is configured to be distributed to vehicle systems during a compressor activation event.

The air processing system I comprises a multi circuit protection valve 70 connected to the air dryer device 40. The multi circuit protection valve 70 is configured to distribute compressed dried air A1 from the air dryer device 40 via a distribution block 80 to circuits of different systems of the vehicle such as brake system and air suspension system.

The air processing system I comprises or is operably connected to a control arrangement 100. Said control arrangement 100 is arranged to control said air processing system I. Said control arrangement 100 is operably connected to said air processing system I via one or more links.

Said control arrangement 100 is arranged to control said air dryer device 40. Said control arrangement 100 is operably connected to said air dryer device 40 via one or more links.

Said control arrangement 100 may comprise one or more electronic control units, processing units, computers, server units or the like for facilitating controlling said air processing system I. Said control arrangement 100 may comprise one or more electronic control units arranged on board said vehicle. The air processing system I may comprise one or more electronic control units of said control arrangement 100 and/or be operably connected to or more electronic control units of said control arrangement 100.

The compressed air A from the compressor 20 is thus introduced into the air dryer device 40 and is led via the support member 50 through the container portion 42a and through the recess portion 42b into the support member 50. The dried air A1 is then led to the distribution block 80 via the valve 70 for distribution to air systems of the vehicle.

The control arrangement 100 is operably connected to, via a link, a temperature determination means 110 for determining the temperature associated with said purge valve. The control arrangement 100 is via the link arranged to receive a signal from the means 110, the signal representing data for the determined temperature.

Said temperature determination means 110 is according to an embodiment arranged to determine the external temperature in connection to the vehicle, e.g. during drive of the vehicle. Said temperature determination means 110 may comprise one or more temperature sensors arranged on said vehicle.

Said temperature determination means 110 is according to an embodiment arranged to determine the temperature directly in connection to the purge valve 60, e.g. during drive of the vehicle. Said temperature determination means 110 may comprise one or more temperature sensors arranged in connection to said purge valve 60.

The control arrangement 100 is operably connected to, via a link, a means 120 for determining a compressor activation event. The control arrangement 100 is via the link arranged to receive a signal from the means 120, the signal representing data for compressor activation event. Said data according to an embodiment comprises compressor activation and compressor deactivation. Said data according to an embodiment comprises compressor activation and compressor deactivation. Said data according to an embodiment comprises compressor activation time.

According to the present invention regeneration is arranged to be performed after a compressor activation event if said temperature is determined to be below a predetermined temperature value. The regeneration is arranged to be performed so that moist in connection to said purge valve 60 is removed. The regeneration is according to an embodiment arranged to be performed based on degree of moist in said air dryer device 40. The regeneration is according to an embodiment arranged to be performed based on compressor activation time. The compressor activation time corresponds to degree of moist in said air dryer device 40, i.e. longer compressor activation time results in more moist in said air dryer device 40.

During said regeneration, dried compressed air A2 is thus introduced into the air dryer device 40 into the support member 50 through the recess portion 42b and led through the container portion 42a and regeneration air A3 is vented through said purge valve 60 via said support member 50. The dried compressed air A2 is thus, during said regeneration, provided to said air dryer device 40 via said valve 70.

Said regeneration is arranged to be performed until said moist in connection to said purge valve 60 is removed and hence the purge valve 60 and its surrounding is dry.

Said regeneration is arranged to be performed by means of an amount of dried compressed air A2 required during said regeneration so that moist in connection to said purge valve 60 is removed.

The air processing system I is thus arranged to be controlled so that freezing of said purge valve 60 of the air dryer device 40 of said air processing system is prevented.

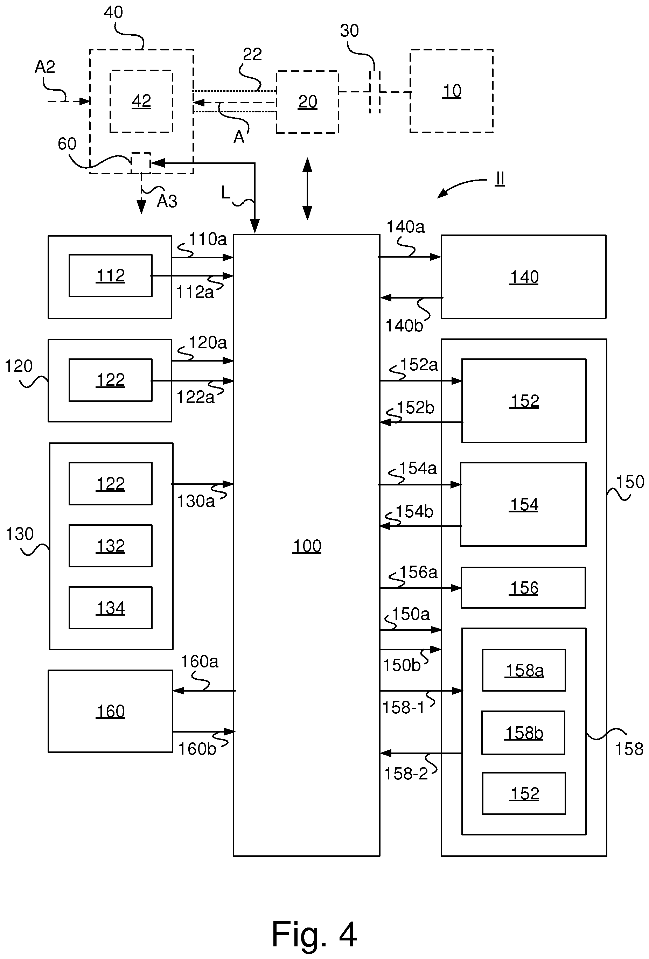

The air processing system I is according to an embodiment arranged to be controlled by means of a system II described with reference to fig. 4 so that freezing of said purge valve 60 of the air dryer device 40 of said air processing system is prevented.

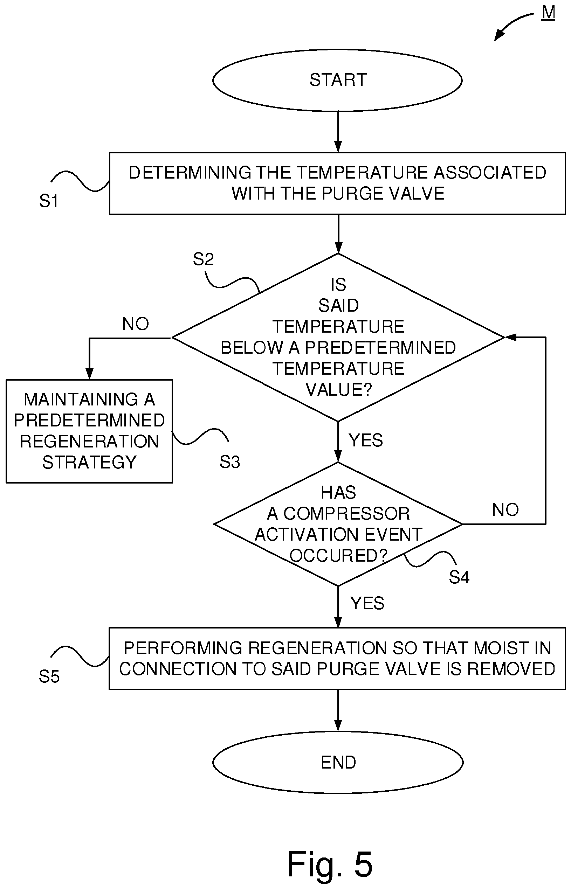

The air processing system I is arranged to be controlled in accordance with the method described with reference to fig. 5 so that freezing of said purge valve 60 of the air dryer device 40 of said air processing system is prevented.

Fig. 3b schematically illustrates a bottom view of said air dryer cartridge 42 of the air dryer device 40 of the air processing system I in fig. 3a according to an embodiment of the present invention.

Said air dryer cartridge 42 thus has said recess portion 42b constituting an opening for allowing dried compressed air A1 through to be distributed to vehicle systems after being dried in said cartridge 42 during a compressor activation event. The opening of said recess portion 42b is further arranged to allow dried compressed air A2 into said cartridge 42 during regeneration.

Said air dryer cartridge 42 further comprises openings 42c for allowing compressed air A into said cartridge during a compressor activation event and allowing air A3 out from said cartridge for venting through said purge valve during regeneration.

Fig. 3b only illustrates an example of a configuration of an air dryer cartridge 42. Said air dryer cartridge according to the present invention may have any suitable design for allowing compressed air to pass during compressor activation event and during regeneration.

Fig. 4 schematically illustrates a system II for controlling an air processing system of a vehicle according to an embodiment of the present invention.

Said air processing system comprises an air dryer device 40 configured to dry compressed air A from a compressor 20 operable by means of a drive member 10. Said air dryer device 40 comprises an air dryer cartridge 42 for said drying of compressed air. Said air dryer cartridge 42 is connected to said compressor 20 via a feeding line 22 for providing said compressed air to and through said cartridge 42. Said dried compressed air A is configured to be distributed to vehicle systems during a compressor activation event. Said air dryer device 40 further comprises a purge valve 60 for venting air A3 during regeneration of the air dryer cartridge 42 by means of dried compressed air A2.

The air dryer device 40 corresponds according to an embodiment to the air dryer device 40 described with reference to fig. 3a. The air dryer device could have any suitable design.

The system II comprises a control arrangement 100. Said control arrangement 100 is arranged to control said air processing system I. Said control arrangement 100 is arranged to control said air dryer device 40. Said control arrangement 100 may comprise one or more electronic control units, processing units, computers, server units or the like for facilitating controlling said air processing system I. Said control arrangement 100 may comprise control arrangement such as one or more electronic control units arranged on board said vehicle.

The system II comprises temperature determination means 110 for determining the temperature associated with said purge valve.

Said temperature determination means 110 is according to an embodiment arranged to determine the external temperature in connection to the vehicle, e.g. during drive of the vehicle. Said temperature determination means 110 may comprise one or more temperature sensors arranged on said vehicle. Said temperature determination means 110 comprises according to an embodiment means for extracting temperature data from one or more temperature data units comprising any suitable external server unit. Said temperature determination means 110 comprises one or more temperature data units.

The system II may comprise means for determining weather conditions in connection to the vehicle. Said temperature determination means 110 may be comprised in such a means for determining weather conditions. Said means for determining weather conditions may comprise determining degree of moist in the atmosphere external to the vehicle. The means for determining weather conditions in connection to the vehicle may comprise any suitable sensors for determining whether conditions such as moist sensors for determining degree of moist in the atmosphere, precipitation sensors for determining precipitation comprising snow or rain, wind sensors etc. The means for determining weather conditions in connection to the vehicle driving along said road comprises according to an embodiment means for extracting external weather data from one or more external weather data units comprising any suitable external server unit. The means for determining weather conditions in connection to the vehicle comprises one or more external weather data units.

Said temperature determination means 110 is according to an embodiment arranged to determine the temperature directly in connection to the purge valve, e.g. during drive of the vehicle. Said temperature determination means 110 may comprise one or more temperature sensors arranged in connection to said purge valve.

The system comprises means 112 for determining if said temperature is below a predetermined temperature value. Said means 112 for determining if said temperature is below a predetermined temperature value is according to an embodiment comprised in said control arrangement 100. Said means 112 for determining if said temperature is below a predetermined temperature value is according to an embodiment comprised in said temperature determination means 110.

The system comprises means 120 for determining a compressor activation event.

The means 120 for determining a compressor activation event comprises means for determining activation of said compressor 20. When the compressor 20 is coupled to the drive member 10 via a clutch arrangement 30, the means 120 for determining activation of said compressor 20 comprises means for detecting engagement of said clutch arrangement 30. The means 120 for determining activation of said compressor 20 may comprise means for determining increase of air pressure in said feeding line 22. Said means for determining increase of air pressure in said feeding line 22 may comprise any suitable pressure sensor.

The means 120 for determining a compressor activation event comprises means for determining deactivation of said compressor 20. When the compressor 20 is coupled to the drive member 10 via a clutch arrangement 30 the means 120 for determining deactivation of said compressor 20 comprises means for detecting disengagement of said clutch arrangement 30. The means 120 for determining deactivation of said compressor 20 may comprise means for determining decrease of air pressure in said feeding line 22. Said means for determining decrease of air pressure in said feeding line 22 may comprise any suitable pressure sensor.

The means 120 for determining a compressor activation event comprises compressor activation time determination means 122 for determining compressor activation time during a compressor activation event. Said compressor activation time determination means 122 may comprise any suitable means for determining activation time of compressor 20. When the compressor 20 is coupled to the drive member 10 via a clutch arrangement 30 the means 122 may comprise means for determining engagement time of said clutch arrangement 30. Said compressor activation time determination means 122 may comprise means for determining pressure in said feeding line 22 for determining the time said air pressure was over a predetermined pressure value.

According to an embodiment, the system II comprises moist determination means 130 arranged to determine the degree of moist in said air dryer device 40.

According to an embodiment of the system II, said moist determination means 130 for determining the degree of moist in said air dryer device 40 is arranged to determine degree of moist based on amount of compressed air having passed said air dryer cartridge during a compressor activation time.

According to an embodiment of the system II, said moist determination means 130 for determining the degree of moist in said air dryer device 40 comprises said compressor activation time determination means 122 for determining compressor activation time during a compressor activation event.

According to an embodiment of the system II, said moist determination means 130 comprises means 132 for determining amount of compressed air having passed said air dryer cartridge during said compressor activation time.

The means 132 for determining amount of compressed air having passed said air dryer cartridge during said compressor activation time may comprise any suitable means. Said means 132 may comprise one or more of the following: Air pressure determination means for determining pressure of said compressed air A having passed said air dryer cartridge. Compressor settings. Means for determining air flow speed of said compressed air. Means for determining drive member operation for operating said compressor 20.

According to an embodiment of the system II, said moist determination means 130 comprises means 134 for detecting degree of moist in said air dryer cartridge 42 after compressor activation event. Said means 134 for detecting degree of moist in said air dryer cartridge 42 may comprise one or more suitable moist sensors arranged to detect moist within said cartridge 42.

According to an embodiment, the system II comprises determining means 140 for determining amount of dried compressed air required during said regeneration so that moist in connection to said purge valve 60 is removed based on said determined degree of moist in said air dryer device prior to performing regeneration after a compressor activation event.

The system II comprises regeneration performance means 150 arranged to perform regeneration after a determined compressor activation event if said temperature is determined to be below said predetermined temperature value so that moist in connection to said purge valve 60 is removed. The purge valve 60 is open during said regeneration. The purge valve 60 and the environment around said purge valve 60 is dried so that the purge valve 60 will not freeze in any position.

Said regeneration performance by means of said regeneration performance means 150 is arranged to be performed such that said purge valve 60 and the surrounding of said purge valve within said air dryer device 40 is dried so that the purge valve 60 and the surrounding of said purge valve is dry after said regeneration. This after a determined compressor activation event if said temperature is determined to be below said predetermined temperature value.

Said regeneration performance means 150 is arranged to perform said regeneration based on said determined degree of moist in said air dryer device 40.

Said regeneration performance means 150 is arranged to perform said regeneration so that said required amount of dried compressed air is used for said regeneration.

According to an embodiment of the system II, said regeneration performance means 150 arranged to perform said regeneration so that said required amount of dried compressed air is used for said regeneration comprises: regeneration event performance means 152 for performing a regeneration event until the air pressure of said dried compressed air has been reduced to a predetermined pressure level.

According to an embodiment of the system II, said predetermined pressure level to which said dried compressed air is reduced is to a pressure level at which the vehicle systems requiring said compressed air, such as brake system and/or suspension system of a vehicle, still can be performed. According to an embodiment of the system II, said regeneration performance means 150 comprises means 154 for determining whether said required amount of dried compressed air has been used.

According to an embodiment of the system II, said regeneration performance means 150 comprises means 156 for terminating said regeneration performance if said required amount of dried compressed air has been used for said regeneration.

Said means 156 for terminating said regeneration performance if said required amount of dried compressed air has been used for said regeneration comprises means for closing said purge valve. Said means for closing said purge valve 60 is according to an embodiment comprised in said control arrangement.

According to an embodiment of the system II, said regeneration performance means 150 comprises regeneration continuation performance means 158 for continuing regeneration if said required amount of dried compressed air has not been used for said regeneration.

Said regeneration continuation performance means 158 comprises means 158a for closing said purge valve 60.

Said regeneration continuation performance means 158 comprises compressor activation event performance means 158b for performing a compressor activation event so as to increase the pressure of said compressed dried air to a predetermined pressure

Said regeneration continuation performance means 158 comprises said regeneration event performance means 152 for performing another regeneration event until the air pressure of said dried compressed air has been reduced to a predetermined pressure level.

Said regeneration continuation performance means 158 is arranged to repeat said regeneration continuation until said required amount of dried compressed air has been used for said regeneration.

According to an embodiment of the system II, the system comprises pressure adaption means 160. The pressure adaption means 160 is arranged to, prior to performing said regeneration and during a compressor activation event, adapt the pressure of said compressed dried air A distributed to vehicle systems during said compressor activation event. The pressure adaption means 160 is arranged to perform said adaption based on the activation time of said compressor activation event. This so that, during regeneration when said air pressure of said dried compressed air has been reduced to a predetermined pressure level, said required amount of dried compressed air has been used for said regeneration so that moist in connection to said purge valve is removed.

The control arrangement 100 is operably connected, via a link 110a, to the temperature determination means 110 for determining the temperature associated with said purge valve. The control arrangement 100 is via the link 110a arranged to receive a signal from the means 110 representing data for determined temperature.

The control arrangement 100 is operably connected, via a link 112a, to the means 112 for determining if said temperature is below a predetermined temperature value. The control arrangement 100 is via the link 112a arranged to send a signal to the means 112 representing data for whether the temperature is below said predetermined temperature value.

The control arrangement 100 is operably connected, via a link 120a, to the means 120 for determining a compressor activation event. The control arrangement 100 is via the link 120a arranged to receive a signal from the means 120 representing data for compressor activation event, said data according to an embodiment comprising compressor activation and compressor deactivation.

The control arrangement 100 is operably connected, via a link 122a, to the compressor activation time determination means 122. The control arrangement 100 is via the link 122a arranged to receive a signal from the means 122 representing data for compressor activation time.

The control arrangement 100 is operably connected, via a link 130a, to the moist determination means 130. The control arrangement 100 is via the link 130a arranged to receive a signal from the means 130 representing data for determined degree of moist in said air dryer device 40.

The control arrangement 100 is operably connected, via a link 140a, to the means 140 for determining amount of dried compressed air required during said regeneration so that moist in connection to said purge valve 60 is removed. The control arrangement 100 is via the link 140a arranged to send a signal to the means 140 representing data for determined degree of moist in said air dryer device prior to performing regeneration after a compressor activation event.

The control arrangement 100 is operably connected, via a link 140b, to the means 140 for determining amount of dried compressed air required during said regeneration . The control arrangement 100 is via the link 140b arranged to receive a signal from the means 140 representing data for determined amount of dried compressed air required during said regeneration so that moist in connection to said purge valve 60 is removed.

The control arrangement 100 is operably connected, via a link 150a, to the means 150 arranged to perform regeneration after a determined compressor activation event if said temperature is determined to be below said predetermined temperature value . The control arrangement 100 is via the link 150a arranged to send a signal to the means 150 representing data for said temperature being determined to be below said predetermined temperature value.

The control arrangement 100 is operably connected, via a link 150b, to the means 150 arranged to perform regeneration after a determined compressor activation event if said temperature is determined to be below said predetermined temperature value . The control arrangement 100 is via the link 150b arranged to send a signal to the means 150 representing data about said compressor activation event, said data according to an embodiment comprising .

The control arrangement 100 is operably connected, via a link 152a, to the regeneration event performance means 152 for performing a regeneration event until the air pressure of said dried compressed air has been reduced to a predetermined pressure level. The control arrangement 100 is via the link 152a arranged to send a signal to the means 152 representing data about air pressure of said dried compressed.

The control arrangement 100 is operably connected, via a link 152b, to the regeneration event performance means 152 for performing a regeneration event until the air pressure of said dried compressed air has been reduced to a predetermined pressure level. The control arrangement 100 is via the link 152b arranged to receive a signal from the means 152 representing data about termination of said regeneration event due to said air pressure of said dried compressed air having been reduced to said predetermined pressure level.

The control arrangement 100 is operably connected, via a link 154a, to the means 154 for determining whether said required amount of dried compressed air has been used. The control arrangement 100 is via the link 154a arranged to send a signal to the means 154 representing data about amount of dried compressed air used during regeneration.

The control arrangement 100 is operably connected, via a link 154b, to the means 154 for determining whether said required amount of dried compressed air has been used. The control arrangement 100 is via the link 154b arranged to receive a signal from the means 154 representing data about whether said required amount of dried compressed air has been used.

The control arrangement 100 is operably connected, via a link 156a, to the means 156 for terminating said regeneration performance if said required amount of dried compressed air has been used for said regeneration. The control arrangement 100 is via the link 156a arranged to send a signal to the means 156 representing data about terminating said regeneration performance due to said required amount of dried compressed air having been used for said regeneration.

The control arrangement 100 is operably connected, via a link 158-1, to the regeneration continuation performance means 158 . The control arrangement 100 is via the link 158-1 arranged to send a signal to the means 158 representing data about said required amount of dried compressed air not having been used for said regeneration and data about said predetermined pressure level of said dried compressed air having been reached. Said signal to the means 158 may also comprise data representing closing of purge valve 60, data for performing a compressor activation event so as to increase the pressure of said compressed dried are to a predetermined pressure and data for performing another regeneration event until the air pressure of said dried compressed air has been reduced to a predetermined pressure level.

The control arrangement 100 is operably connected, via a link 158-2, to the regeneration continuation performance means 158 . The control arrangement 100 is via the link 158-2 arranged to receive a signal from the means 158 representing data about said regeneration continuation performance comprising data about said another regeneration event having been performed.

The control arrangement 100 is, via a link 160a, operably connected to the pressure adaption means 160. The control arrangement 100 is via the link 160a arranged to send a signal to the means 160 representing data about activation time of a compressor activation event and data about required amount of dried compressed air for said regeneration so that moist in connection to said purge valve is removed.

The control arrangement 100 is operably connected to the pressure adaption means 160 via a link 160b. The control arrangement 100 is via the link 160b arranged to receive a signal from the means 160 representing data about said required amount of dried compressed air having been used for said regeneration so that said regeneration may be terminated.

Said control arrangement 100 is operably connected to said purge valve 60 via a link L. Said control arrangement is via said link L arranged to send a signal to said purge valve 60 representing data for controlling said purge valve comprising data for opening and closing said purge valve 60. Said control arrangement is via said link L arranged to receive a signal from said purge valve 60 representing data for status of purge valve comprising data for whether said purge valve 60 is open for venting air to the atmosphere or closed for preventing venting of air to the atmosphere.

Fig. 5 schematically illustrates a flowchart of an exemplifying embodiment of a method M for controlling an air processing system of a vehicle. Said air processing system comprises an air dryer device configured to dry compressed air from a compressor operable by means of a drive member. Said air dryer device comprises an air dryer cartridge for said drying of compressed air. Said dried compressed air is configured to be distributed to vehicle systems during a compressor activation event. Said air dryer device further comprises a purge valve for venting air during regeneration of the air dryer cartridge by means of dried compressed air.

According to the embodiment, the method for controlling an for controlling an air processing system of a vehicle comprises a step S1. In this step the temperature associated with the purge valve is determined. The temperature is determined by temperature determination means such as any suitable temperature sensor.

According to the embodiment, the method for controlling an air processing system of a vehicle comprises a step S2. In this step it is determined if said temperature is below a predetermined temperature value.

According to the embodiment, the method for controlling an air processing system of a vehicle comprises a step S3. In this step a predetermined regeneration strategy is maintained if said temperature is determined not to be below a predetermined temperature value.

According to the embodiment, the method for controlling an air processing system of a vehicle comprises a step S4. In this step it is determined if a compressor activation event has occurred if said temperature is determined to be below a predetermined temperature value. The step S4 may comprise determining the activation time of said compressor activation event.

According to the embodiment, the method for controlling an air processing system of a vehicle comprises a step S5. In this step regeneration is performed so that moist in connection to said purge valve is removed.

The method thus comprises the step S2 of determining if said temperature is below a predetermined temperature value.

The method thus also comprises the step S4 of determining if a compressor activation event has occurred.

Thus, if a compressor activation event has occurred and the temperature has been determined to be below a predetermined temperature value, regeneration is performed so that moist in connection to said purge valve is removed. Thus, said regeneration is performed to such an extent that the purge valve and its surrounding after said regeneration is dry.

If said temperature is determined not to be below said predetermined temperature value, a predetermined regeneration strategy is maintained. Said predetermined regeneration strategy may be any suitable regeneration strategy. Said predetermined regeneration strategy may be a regeneration strategy where regeneration is not performed after every compressor activation event.

If no compressor activation event has occurred, no regeneration will be performed and determination whether the temperature is below said predetermined temperature value will continue.

Thus, the method comprises the step of maintaining a predetermined regeneration strategy if it is determined that said predetermined temperature value is not below said predetermined temperature value.

Said predetermined temperature value may be any suitable temperature value which may pose a risk for freezing of said purge valve. Said temperature value, when looking at the external temperature external relative to but in connection to the vehicle, i.e. the outdoor temperature, may depend on other weather circumstances such as degree of moist in the atmosphere/air in the surroundings of said vehicle. Said predetermined temperature value may be about 2 degrees Celsius.

The step of performing regeneration after a compressor activation event so that moist in connection to said purge valve is removed, is according to an embodiment performed essentially immediately after said compressor activation event. The step of performing regeneration after a compressor activation event so that moist in connection to said purge valve is removed, is according to an embodiment performed in connection to deactivation of said compressor. The method may thus comprise the step of detecting deactivation of compressor.

According to an embodiment, the method comprises a step of determining the degree of moist in said air dryer device, wherein the step of performing regeneration after a compressor activation event so that moist in connection to said purge valve is removed is performed based on said determined degree of moist in said air dryer device.

According to an embodiment of the method, the step of determining the degree of moist in said air dryer device comprises the step of determining compressor activation time during a compressor activation event; and determining amount of compressed air having passed said air dryer cartridge during said compressor activation time.

The step of determining compressor activation time during a compressor activation event may be performed by any suitable means for determining activation time of a compressor. When the compressor is coupled to the drive member via a clutch arrangement, the step of determining compressor activation time may comprise the step of determining engagement time of said clutch arrangement, which may be performed by means of any suitable sensor. The step of determining compressor activation time during a compressor activation event may comprises the step of determining pressure of said compressed air from said compressor for determining the time said air pressure was over a predetermined pressure value. The step of determining pressure of said compressed air from said compressor may be performed by means of any suitable pressure sensor.

According to an embodiment of the method, the step of determining the degree of moist in said air dryer device comprises the step of detecting the degree of moist in said air dryer device by means of one or more suitable moist sensors arranged in an air dryer cartridge of said air dryer device.

According to an embodiment, the method comprises the step of, prior to performing regeneration after a compressor activation event, determining amount of dried compressed air required during said regeneration so that moist in connection to said purge valve is removed based on said determined degree of moist in said air dryer device. The step of performing regeneration after a compressor activation event is then performed so that said required amount of dried compressed air is used for said regeneration.

According to an embodiment of the method, said step of performing said regeneration so that said required amount of dried compressed air is used for said regeneration comprises the following steps: Performing a regeneration event until the air pressure of said dried compressed air has been reduced to a predetermined pressure level. Determining whether said required amount of dried compressed air has been used. If said required amount of dried compressed air has been used for said regeneration, said regeneration performance is terminated. If said required amount of dried compressed air has not been used for said regeneration, a regeneration continuation is performed. Said regeneration continuation comprises the following steps: Closing said purge valve. Performing a compressor activation event so as to increase the pressure of said compressed dried air to a predetermined pressure. Performing another regeneration event until the air pressure of said dried compressed air has been reduced to a predetermined pressure level. Said regeneration continuation is repeated until said required amount of dried compressed air has been used for said regeneration.

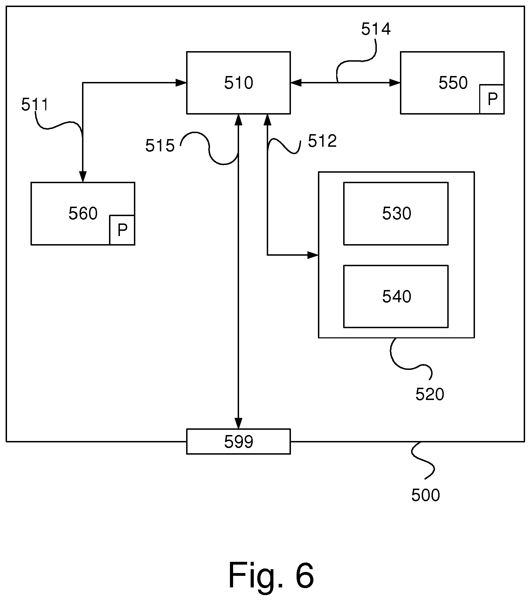

According to an embodiment, the method comprises the step of, prior to performing said regeneration, during a compressor activation event, adapting the pressure of said compressed dried air distributed to vehicle systems. The pressure of said compressed dried air is adapted during said compressor activation event based on the activation time of said compressor activation event. This so that, during regeneration, when said air pressure of said dried compressed air has been reduced to a predetermined pressure level, said required amount of dried compressed air has been used for said regeneration so that moist in connection to said purge valve is removed. With reference to figure 6, a diagram of a computer 500/apparatus 500 is shown. The control arrangement 100 described with reference to fig. 3a and fig. 4 may according to an embodiment comprise apparatus 500. Apparatus 500 comprises a non-volatile memory 520, a data processing device 510 and a read/write memory 550. Non-volatile memory 520 has a first memory portion 530 wherein a computer program, such as an operating system, is stored for controlling the function of apparatus 500. Further, apparatus 500 comprises a bus controller, a serial communication port, I/O-means, an A/D-converter, a time date entry and transmission unit, an event counter and an interrupt controller (not shown). Non-volatile memory 520 also has a second memory portion 540.

A computer program P is provided comprising routines for controlling an air processing system of a vehicle. Said air processing system comprises an air dryer device configured to dry compressed air from a compressor operable by means of a drive member. Said air dryer device comprises an air dryer cartridge for said drying of compressed air. Said dried compressed air is configured to be distributed to vehicle systems during a compressor activation event. Said air dryer device further comprises a purge valve for venting air during regeneration of the air dryer cartridge by means of dried compressed air. The program P comprises routines for determining the temperature associated with said purge valve. The program P comprises routines for performing regeneration after a compressor activation event so that moist in connection to said purge valve is removed if said temperature is below a predetermined temperature value. The program P comprises routines for determining the degree of moist in said air dryer device, wherein the routines for performing regeneration after a compressor activation event so that moist in connection to said purge valve is removed is performed based on said determined degree of moist in said air dryer device.

The routines for determining the degree of moist in said air dryer device comprises routines for determining compressor activation time during a compressor activation event; and routines for determining amount of compressed air having passed said air dryer cartridge during said compressor activation time.

The program P comprises routines for, prior to performing regeneration after a compressor activation event, determining amount of dried compressed air required during said regeneration so that moist in connection to said purge valve is removed based on said determined degree of moist in said air dryer device, wherein the routines for performing regeneration after a compressor activation event is performed so that said required amount of dried compressed air is used for said regeneration.

The routines for performing said regeneration so that said required amount of dried compressed air is used for said regeneration comprises the following routines: Performing a regeneration event until the air pressure of said dried compressed air has been reduced to a predetermined pressure level. Determining whether said required amount of dried compressed air has been used. Terminating said regeneration performance if said required amount of dried compressed air has been used for said regeneration. Performing a regeneration continuation if said required amount of dried compressed air has not been used for said regeneration, Said regeneration continuation comprises the following: Closing said purge valve. Performing a compressor activation event so as to increase the pressure of said compressed dried are to a predetermined pressure. Performing another regeneration event until the air pressure of said dried compressed air has been reduced to a predetermined pressure level Said regeneration continuation is repeated until said required amount of dried compressed air has been used for said regeneration.

The program P comprises routines for, prior to performing said regeneration, during a compressor activation event, adapting the pressure of said compressed dried air distributed to vehicle systems. The pressure of said compressed dried air is adapted during said compressor activation event based on the activation time of said compressor activation event. This so that, during regeneration when said air pressure of said dried compressed air has been reduced to a predetermined pressure level, said required amount of dried compressed air has been used for said regeneration so that moist in connection to said purge valve is removed.

The computer program P may be stored in an executable manner or in a compressed condition in a separate memory 560 and/or in read/write memory 550.

When it is stated that data processing device 510 performs a certain function it should be understood that data processing device 510 performs a certain part of the program which is stored in separate memory 560, or a certain part of the program which is stored in read/write memory 550.

Data processing device 510 may communicate with a data communications port 599 by means of a data bus 515. Non-volatile memory 520 is adapted for communication with data processing device 510 via a data bus 512. Separate memory 560 is adapted for communication with data processing device 510 via a data bus 511. Read/write memory 550 is adapted for communication with data processing device 510 via a data bus 514. To the data communications port 599 e.g. the links connected to the control unit 100 may be connected.

When data is received on data port 599 it is temporarily stored in second memory portion 540. When the received input data has been temporarily stored, data processing device 510 is set up to perform execution of code in a manner described above. The signals received on data port 599 may be used by apparatus 500 for determining the temperature associated with said purge valve. The signals received on data port 599 may be used by apparatus 500 for performing regeneration after a compressor activation event so that moist in connection to said purge valve is removed if said temperature is below a predetermined temperature value. The signals received on data port 599 may be used by apparatus 500 for determining the degree of moist in said air dryer device, wherein the signals used for performing regeneration after a compressor activation event so that moist in connection to said purge valve is removed are using information of said determined degree of moist in said air dryer device.

The signals used for determining the degree of moist in said air dryer device comprises signals used for determining compressor activation time during a compressor activation event; and signals used for determining amount of compressed air having passed said air dryer cartridge during said compressor activation time.

The signals received on data port 599 may be used by apparatus 500 for, prior to performing regeneration after a compressor activation event, determining amount of dried compressed air required during said regeneration so that moist in connection to said purge valve is removed based on said determined degree of moist in said air dryer device. The signals used for performing regeneration after a compressor activation event are then used so that said required amount of dried compressed air is used for said regeneration.

The signals used for performing said regeneration so that said required amount of dried compressed air is used for said regeneration comprises signals used for the following: Performing a regeneration event until the air pressure of said dried compressed air has been reduced to a predetermined pressure level. Determining whether said required amount of dried compressed air has been used. Terminating said regeneration performance if said required amount of dried compressed air has been used for said regeneration. Performing a regeneration continuation if said required amount of dried compressed air has not been used for said regeneration. Said regeneration continuation comprises the following: closing said purge valve. Performing a compressor activation event so as to increase the pressure of said compressed dried are to a predetermined pressure. Performing another regeneration event until the air pressure of said dried compressed air has been reduced to a predetermined pressure level. Said regeneration continuation is repeated until said required amount of dried compressed air has been used for said regeneration.

The signals used for, prior to performing said regeneration, during a compressor activation event, adapting the pressure of said compressed dried air distributed to vehicle systems. The pressure of said compressed dried air is adapted during said compressor activation event based on the activation time of said compressor activation event. This so that, during regeneration when said air pressure of said dried compressed air has been reduced to a predetermined pressure level, said required amount of dried compressed air has been used for said regeneration so that moist in connection to said purge valve is removed.

Parts of the methods described herein may be performed by apparatus 500 by means of data processing device 510 running the program stored in separate memory 560 or read/write memory 550. When apparatus 500 runs the program, parts of the methods described herein are executed.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A method (M) for controlling an air processing system (I) of a vehicle (1), said air processing system comprising an air dryer device (40) configured to dry compressed air (A) from a compressor (20) operable by means of a drive member (10), said air dryer device (40) comprising an air dryer cartridge (42) for said drying of compressed air, said dried compressed air (A1) being configured to be distributed to vehicle systems during a compressor activation event, said air dryer device further comprising a purge valve (60) for venting air during regeneration of the air dryer cartridge (42) by means of dried compressed air, **characterized by** the steps of:
- determining (S1) the temperature associated with said purge valve by means of temperature determination means (110);
- if said temperature is below a predetermined temperature value, performing (S5) regeneration after a compressor activation event so that moist in connection to said purge valve (60) is removed.

2. A method according to claim 1, comprising the step of determining the degree of moist in said air dryer device (40) by means of moist determination means (130), wherein the step of performing regeneration after a compressor activation event so that moist in connection to said purge valve (60) is removed is performed based on said determined degree of moist in said air dryer device (40).

3. A method according to claim 2, wherein the step of determining the degree of moist in said air dryer device (40) comprises the step of determining compressor activation time during a compressor activation event; and determining amount of compressed air (A) having passed said air dryer cartridge (42) during said compressor activation time.

4. A method according to claim 2 or 3, comprising the step of, prior to performing regeneration after a compressor activation event, determining amount of dried compressed air (A2) required during said regeneration so that moist in connection to said purge valve (60) is removed based on said determined degree of moist in said air dryer device (40), wherein the step of performing regeneration after a compressor activation event is performed so that said required amount of dried compressed air (A2) is used for said regeneration.

5. A method according to claim 4, wherein said step of performing said regeneration so that said required amount of dried compressed air (A2) is used for said regeneration comprises the steps of: performing a regeneration event until the air pressure of said dried compressed air has been reduced to a predetermined pressure level; determining whether said required amount of dried compressed air (A2) has been used; if said required amount of dried compressed air (A2) has been used for said regeneration, terminating said regeneration performance; and, if said required amount of dried compressed air (A2) has not been used for said regeneration, performing a regeneration continuation comprising: closing said purge valve; performing a compressor activation event so as to increase the pressure of said compressed dried are to a predetermined pressure; and performing another regeneration event until the air pressure of said dried compressed air has been reduced to a predetermined pressure level; repeating said regeneration continuation until said required amount of dried compressed air (A2) has been used for said regeneration.

6. A method according to claim 4, comprising the step of, prior to performing said regeneration, during a compressor activation event, adapting the pressure of said compressed dried air distributed to vehicle systems during said compressor activation event based on the activation time of said compressor activation event so that, during regeneration when said air pressure of said dried compressed air has been reduced to a predetermined pressure level, said required amount of dried compressed air (A2) has been used for said regeneration so that moist in connection to said purge valve (60) is removed.

7. A system (II) for controlling an air processing system (I) of a vehicle (1), said air processing system comprising an air dryer device (40) configured to dry compressed air (A) from a compressor (20) operable by means of a drive member (10), said air dryer device (40) comprising an air dryer cartridge (42) for said drying of compressed air, said dried compressed air (A1) being configured to be distributed to vehicle systems during a compressor activation event, said air dryer device further comprising a purge valve (60) for venting air during regeneration of the air dryer cartridge (42) by means of dried compressed air, **characterized by** temperature determination means (110) for determining the temperature associated with said purge valve; means (112) for determining if said temperature is below a predetermined temperature value; means (120) for determining a compressor activation event; and regeneration performance means (150) arranged to perform regeneration after a determined compressor activation event if said temperature is determined to be below said predetermined temperature value so that moist in connection to said purge valve (60) is removed.

8. A system according to claim 7, comprising moist determination means (130) arranged to determine the degree of moist in said air dryer device (40), wherein said regeneration performance means (150) is arranged to perform said regeneration based on said determined degree of moist in said air dryer device (40).

9. A system according to claim 8, wherein said moist determination means (130) for determining the degree of moist in said air dryer device (40) comprises compressor activation time determination means (122) for determining compressor activation time during a compressor activation event; and means (132) for determining amount of compressed air (A) having passed said air dryer cartridge (42) during said compressor activation time.

10. A system according to claim 8 or 9, comprising determining means (140) for determining amount of dried compressed air (A2) required during said regeneration so that moist in connection to said purge valve (60) is removed based on said determined degree of moist in said air dryer device (40) prior to performing regeneration after a compressor activation event, wherein said regeneration performance means (150) is arranged to perform said regeneration so that said required amount of dried compressed air (A2) is used for said regeneration.

11. A system according to claim 10, wherein said regeneration performance means (150) arranged to perform said regeneration so that said required amount of dried compressed air (A2) is used for said regeneration comprises: regeneration event performance means (152) for performing a regeneration event until the air pressure of said dried compressed air has been reduced to a predetermined pressure level; means (154) for determining whether said required amount of dried compressed air (A2) has been used; means (156) for terminating said regeneration performance if said required amount of dried compressed air (A2) has been used for said regeneration; and, if said required amount of dried compressed air (A2) has not been used for said regeneration, regeneration continuation performance means (158) comprising: means (158a) for closing said purge valve (60), compressor activation event performance means (158b) for performing a compressor activation event so as to increase the pressure of said compressed dried are to a predetermined pressure, and regeneration event performance means (152) for performing another regeneration event until the air pressure of said dried compressed air has been reduced to a predetermined pressure level; said regeneration continuation being arranged to be repeated until said required amount of dried compressed air (A2) has been used for said regeneration.

12. A system according to claim 10, comprising pressure adaption means (160) arranged to, prior to performing said regeneration and during a compressor activation event, adapt the pressure of said compressed dried air distributed to vehicle systems during said compressor activation event based on the activation time of said compressor activation event so that, during regeneration when said air pressure of said dried compressed air has been reduced to a predetermined pressure level, said required amount of dried compressed air (A2) has been used for said regeneration so that moist in connection to said purge valve (60) is removed.

13. A vehicle (1) comprising a system (II) according to any of claims 7-12.

14. A computer program (P) for controlling an air processing system (I) of a vehicle (1), said computer program (P) comprising program code which, when run on an control arrangement (100) or another computer (500) connected to the control arrangement (100), causes the control arrangement to perform the steps according to claim 1-6.

15. A computer readable medium comprising instructions which, when executed by a computer, cause the computer to carry out the method according to anyone of claim 1-6.

## Patentansprüche

1. Verfahren (M) zur Steuerung eines Luftverarbeitungssystems (I) eines Fahrzeugs (1), wobei das Luftverarbeitungssystem eine Lufttrocknungseinrichtung (40) umfasst, die dazu eingerichtet ist, Druckluft (A) aus einem Kompressor (20), der mittels eines Antriebselements (10) betreibbar ist, zu trocknen, wobei die Lufttrocknungseinrichtung (40) eine Lufttrocknungskartusche (42) zum Trocknen von Druckluft aufweist, wobei die getrocknete Druckluft (A1) dazu konfiguriert ist, während eines Kompressoraktivierungsvorgangs auf Fahrzeugsysteme verteilt zu werden, wobei die Lufttrocknungseinrichtung ferner ein Ablassventil (60) zum Ablassen von Luft während eines Regeneration der Lufttrocknungskartusche (42) mittels getrockneter Druckluft aufweist, **gekennzeichnet durch** die Schritte:
- Ermitteln (S1) der dem Ablassventil zugehörigen Temperatur mittels einer Temperaturermittlungseinrichtung (110),
- falls die Temperatur unter einem vorbestimmten Temperaturwert ist, Ausführen (S5) einer Regeneration nach einem Kompressoraktivierungsvorgang, so dass in Verbindung mit dem Ablassventil (60) stehende Feuchtigkeit entfernt wird.

2. Verfahren nach Anspruch 1, umfassend den Schritt des Ermittelns des Feuchtigkeitsgrades in der Lufttrocknungseinrichtung (40) mittels einer Feuchtigkeitsermittlungseinrichtung (130), wobei der Schritt des Ausführens einer Regeneration nach einem Kompressoraktivierungsvorgang zum Entfernen von in Verbindung mit dem Ablassventil (60) stehender Feuchtigkeit basierend auf dem ermittelten Feuchtigkeitsgrad in der Lufttrocknungseinrichtung (40) ausgeführt wird.

3. Verfahren nach Anspruch 2, bei dem der Schritt des Ermittelns des Feuchtigkeitsgrades in der Lufttrocknungseinrichtung (40) den Schritt des Ermittelns einer Kompressoraktivierungszeit während eines Kompressoraktivierungsvorgangs und des Ermittelns einer Menge von Druckluft (A) umfasst, die während der Kompressoraktivierungszeit die Lufttrocknungskartusche (42) durchlaufen hat.

4. Verfahren nach Anspruch 2 oder 3, umfassend den Schritt, vor einem Ausführen einer Regeneration nach einem Kompressoraktivierungsvorgang, des Ermittelns einer Menge getrockneter Druckluft (A2), die während der Regeneration benötigt wird, damit basierend auf dem ermittelten Feuchtigkeitsgrad in der Lufttrocknungseinrichtung (40) in Verbindung mit dem Ablassventil (60) stehende Feuchtigkeit entfernt wird, wobei der Schritt des Ausführens einer Regeneration nach einem Kompressoraktivierungsvorgang so durchgeführt wird, dass die benötigte Menge getrockneter Druckluft (A2) für die Regeneration verwendet wird.

5. Verfahren nach Anspruch 4, bei dem der Schritt des Ausführens der Regeneration solchermaßen, dass die benötigte Menge getrockneter Druckluft (A2) für die Regeneration verwendet wird, die Schritte umfasst: Ausführen eines Regenerationsvorgangs, bis der Luftdruck der getrockneten Druckluft auf einen vorbestimmten Druckwert gefallen ist; Feststellen, ob die benötigte Menge getrockneter Druckluft (A2) verwendet worden ist; falls die benötigte Menge getrockneter Druckluft (A2) für die Regeneration verwendet worden ist, Beenden der Regenerationsausführung; und, falls die benötigte Menge getrockneter Druckluft (A2) nicht für die Regeneration verwendet worden ist, Ausführen einer Regenerationsfortführung umfassend: Schließen des Ablassventils; Ausführen eines Kompressoraktivierungsvorgangs, um den Druck der getrockneten Druckluft auf einen vorbestimmten Druck zu erhöhen; und Ausführen eines weiteren Regenerationsvorgangs, bis der Luftdruck der getrockneten Druckluft auf einen vorbestimmten Druckwert gefallen ist; Wiederholen der Regenerationsfortführung, bis die benötigte Menge getrockneter Druckluft (A2) für die Regeneration verwendet worden ist.

6. Verfahren nach Anspruch 7, umfassend den Schritt, vor Ausführen der Regeneration und während eines Kompressoraktivierungsvorgangs, des Anpassens des Drucks der getrockneten Druckluft, die während des Kompressoraktivierungsvorgangs auf Fahrzeugsysteme verteilt wird, basierend auf der Aktivierungszeit des Kompressoraktivierungsvorgangs solchermaßen, dass während einer Regeneration, wenn der Luftdruck der getrockneten Druckluft auf einen vorbestimmten Druckwert gefallen ist, die benötigte Menge getrockneter Druckkluft (A2) für die Regeneration verwendet worden ist, so dass in Verbindung mit dem Ablassventil (60) stehende Feuchtigkeit entfernt wird.

7. System (II) zur Steuerung eines Luftverarbeitungssystems (I) eines Fahrzeugs (1), wobei das Luftverarbeitungssystem eine Lufttrocknungseinrichtung (40) umfasst, die dazu eingerichtet ist, Druckluft (A) aus einem Kompressor (20), der mittels eines Antriebselements (10) betreibbar ist, zu trocknen, wobei die Lufttrocknungseinrichtung (40) eine Lufttrocknungskartusche (42) zum Trocknen der Druckluft aufweist, wobei die getrocknete Druckluft (A1) dazu konfiguriert ist, während eines Kompressoraktivierungsvorgangs auf Fahrzeugsysteme verteilt zu werden, wobei die Lufttrocknungseinrichtung ferner ein Ablassventil (60) zum Ablassen von Luft während einer Regeneration der Lufttrocknungskartusche (42) mittels getrockneter Druckluft aufweist, **gekennzeichnet durch** eine Temperaturermittlungseinrichtung (110) zum Ermitteln der dem Ablassventil zugehörigen Temperatur; eine Einrichtung (112) zum Feststellen, ob die Temperatur unter einem vorbestimmten Temperaturwert liegt; eine Einrichtung (120) zum Feststellen eines Kompressoraktivierungsvorgangs; und eine Regenerationsausführungseinrichtung (150), die dazu angeordnet ist, eine Regeneration nach einem festgestellten Kompressoraktivierungsvorgang auszuführen, falls die Temperatur als unterhalb des vorbestimmten Temperaturwerts ermittelt worden ist, so dass in Verbindung mit dem Ablassventil (60) stehende Feuchtigkeit entfernt wird.

8. System nach Anspruch 7, mit einer Feuchtigkeitsermittlungseinrichtung (130), die dazu angeordnet ist, den Feuchtigkeitsgrad in der Lufttrocknungseinrichtung (40) zu ermitteln, wobei die Regenerationsausführungseinrichtung (150) dazu angeordnet ist, die Regeneration basierend auf dem ermittelten Feuchtigkeitsgrad in der Lufttrocknungseinrichtung (40) auszuführen.

9. System nach Anspruch 8, bei dem die Feuchtigkeitsermittlungseinrichtung (130) zum Ermitteln des Feuchtigkeitsgrades in der Lufttrocknungseinrichtung (40) eine Kompressoraktivierungszeit-Ermittlungseinrichtung (122) zum Ermitteln einer Kompressoraktivierungszeit während eines Kompressoraktivierungsvorgangs und eine Einrichtung (132) zum Ermitteln einer Menge von Druckluft (A) umfasst, die die Lufttrocknungskartusche (32) während der Kompressoraktivierungszeit durchlaufen hat.

10. System nach Anspruch 8 oder 9, mit einer Ermittlungseinrichtung (140) zum Ermitteln einer Menge getrockneter Druckluft (A2), die während der Regeneration benötigt wird, damit in Verbindung mit dem Ablassventil (60) stehende Feuchtigkeit entfernt wird, basierend auf dem ermittelten Feuchtigkeitsgrad in der Lufttrocknungseinrichtung (40) vor einem Ausführen einer Regeneration nach einem Kompressoraktivierungsvorgang, wobei die Regenerationsausführungseinrichtung (150) dazu angeordnet ist, die Regeneration solchermaßen durchzuführen, dass die benötigte Menge getrockneter Druckluft (A2) für die Regeneration verwendet wird.

11. System nach Anspruch 10, bei dem die Regenerationsausführungseinrichtung (150), die dazu angeordnet ist, die Regeneration so durchzuführen, dass die benötigte Menge getrockneter Druckluft (A2) für die Regeneration verwendet wird, umfasst: eine Regenerationsvorgangsausführungseinrichtung (152) zum Durchführen eines Regenerationsvorgangs, bis der Luftdruck der getrockneten Druckluft auf einen vorbestimmten Druckwert gefallen ist; eine Einrichtung (154) zur Feststellung, ob die benötigte Menge getrockneter Druckluft (A2) verwendet worden ist; eine Einrichtung (156) zum Beenden der Regenerationsausführung, falls die benötigte Menge getrockneter Druckluft (A2) für die Regeneration verwendet worden ist; und, falls die benötigte Menge getrockneter Druckluft (A2) nicht für die Regeneration verwendet worden ist, eine Regenerationsfortführungsausführungseinrichtung (158) umfassend: eine Einrichtung (158a) zum Schließen des Ablassventils (60), eine Kompressoraktivierungsvorgangsausführungseinrichtung (158b) zum Ausführen eines Kompressoraktivierungsvorgangs, um den Druck der getrockneten Druckluft auf einen vorbestimmten Druck zu erhöhen, und eine Regenerationsvorgangsausführungseinrichtung (152) zum Durchführen eines weiteren Regenerationsvorgangs, bis der Luftdruck der getrockneten Druckluft auf einen vorbestimmten Druckwert gefallen ist; wobei eine Regenerationsfortführung dazu vorgesehen ist, wiederholt zu werden, bis die benötigte Menge getrockneter Druckluft (A2) für die Regeneration verwendet worden ist.

12. System nach Anspruch 10, mit einer Druckanpassungseinrichtung (160), die dazu angeordnet ist, vor einem Ausführen der Regeneration und während eines Kompressoraktivierungsvorgangs den Druck der getrockneten Druckluft, die während des Kompressoraktivierungsvorgangs auf Fahrzeugsysteme verteilt wird, basierend auf der Aktivierungszeit des Kompressoraktivierungsvorgangs so anzupassen, dass während einer Regeneration, wenn der Luftdruck der getrockneten Druckluft auf einen vorbestimmten Druckwert gefallen ist, die benötigte Menge getrockneter Druckluft (A2) für die Regeneration verwendet worden ist, so dass in Verbindung mit dem Ablassventil (60) stehende Feuchtigkeit entfernt wird.

13. Fahrzeug (1) mit einem System (II) nach einem der Ansprüche 7 bis 12.

14. Computerprogramm (P) zur Steuerung eines Luftverarbeitungssystems (I) eines Fahrzeugs (1), wobei das Computerprogramm (P) Programmcode enthält, der eine Steueranordnung zur Durchführung der Schritte nach Anspruch 1 bis 6 veranlasst, wenn er auf der Steueranordnung (100) oder einem anderen mit der Steueranordnung (100) verbundenen Computer (500) ausgeführt wird.

15. Computerlesbares Medium mit Anweisungen, die, wenn sie von einem Computer ausgeführt werden, den Computer dazu veranlassen, das Verfahren nach einem der Ansprüche 1 bis 6 durchzuführen.

## Revendications

1. Procédé (M) de commande d'un système de traitement d'air (I) d'un véhicule (1) ledit système de traitement d'air comprenant un dispositif de séchage d'air (40) configuré pour sécher de l'air comprimé (A) à partir d'un compresseur (20) utilisable au moyen d'un élément d'entraînement (10), ledit dispositif de séchage d'air (40) comprenant une cartouche de séchage d'air (42) pour ledit séchage d'air comprimé, ledit air comprimé séché (A1) étant configuré pour être distribué aux systèmes de véhicule durant un événement d'activation de compresseur, ledit dispositif de séchage d'air comprenant en outre une valve de purge (60) pour la ventilation d'air durant la régénération de la cartouche de séchage d'air (42) au moyen d'air comprimé séché, **caractérisé par** les étapes de :
- la détermination (S1) de la température associée à ladite valve de purge au moyen de moyens de détermination de température (110) ;
- si ladite température est inférieure à une valeur de température prédéterminée, l'exécution (S5) d'une régénération après un événement d'activation de compresseur de sorte que l'humidité en connexion avec ladite valve de purge (60) soit éliminée.

2. Procédé selon la revendication 1, comprenant l'étape de la détermination du degré d'humidité dans ledit dispositif de séchage d'air (40) au moyen de moyens de détermination d'humidité (130), dans lequel l'étape de l'exécution d'une régénération après un événement d'activation de compresseur de sorte que l'humidité en connexion avec ladite valve de purge (60) soit éliminée est exécutée sur base dudit degré d'humidité déterminé dans ledit dispositif de séchage d'air (40).

3. Procédé selon la revendication 2, dans lequel l'étape de la détermination du degré d'humidité dans ledit dispositif de séchage d'air (40) comprend l'étape de la détermination du temps d'activation du compresseur durant un événement d'activation du compresseur ; et de la détermination d'une quantité d'air comprimé (A) ayant passé ladite cartouche de séchage d'air (42) durant ledit temps d'activation du compresseur.

4. Procédé selon la revendication 2 ou 3, comprenant l'étape de, avant l'exécution d'une régénération après un événement d'activation du compresseur, la détermination d'une quantité d'air comprimé séché (A2) requise durant ladite régénération de sorte que l'humidité en connexion avec ladite valve de purge (60) soit éliminée sur base dudit degré déterminé d'humidité dans ledit dispositif de séchage d'air (40), dans lequel l'étape de l'exécution d'une régénération après un événement d'activation de compresseur est exécutée de sorte que ladite quantité requise d'air comprimé séché (A2) soit utilisée pour ladite régénération.

5. Procédé selon la revendication 4, dans lequel ladite étape de l'exécution de ladite régénération de sorte que ladite quantité requise d'air comprimé séché (A2) soit utilisée pour ladite régénération comprend les étapes de : l'exécution d'un événement de régénération jusqu'à ce que la pression d'air dudit air comprimé séché ait été réduite à un niveau de pression prédéterminé ; la détermination de si ladite quantité requise d'air comprimé séché (A2) a été utilisée ; si ladite quantité requise d'air comprimé séché (A2) a été utilisée pour ladite régénération, la fin de ladite exécution de régénération ; et, si ladite quantité requise d'air comprimé séché (A2) n'a pas été utilisée pour ladite régénération, l'exécution d'une continuation de régénération comprenant : la fermeture de ladite valve de purge ; l'exécution d'un événement d'activation de compresseur afin d'augmenter la pression dudit air comprimé séché jusqu'à une pression prédéterminée ; et l'exécution d'un autre événement de régénération jusqu'à ce que la pression d'air dudit air comprimé séché ait été réduite à un niveau de pression prédéterminé ; la répétition de ladite continuation de régénération jusqu'à ce que ladite quantité requise d'air comprimé séché (A2) ait été utilisée pour ladite régénération.

6. Procédé selon la revendication 4, comprenant l'étape de, avant l'exécution de ladite régénération, durant un événement d'activation de compresseur, l'adaptation de la pression dudit air séché comprimé distribué aux systèmes de véhicule durant ledit événement d'activation de compresseur sur base du temps d'activation dudit événement d'activation de compresseur afin que, durant la régénération lorsque ladite pression d'air dudit air comprimé séché a été réduite à un niveau de pression prédéterminé, ladite quantité requise d'air comprimé séché (A2) ait été utilisée pour ladite régénération de sorte que l'humidité en connexion avec ladite valve de purge (60) soit éliminée.

7. Système (II) pour la commande d'un système de traitement d'air (I) d'un véhicule (1) ledit système de traitement d'air comprenant un dispositif de séchage d'air (40) configuré pour sécher de l'air comprimé (A) à partir d'un compresseur (20) utilisable au moyen d'un élément d'entraînement (10), ledit dispositif de séchage d'air (40) comprenant une cartouche de séchage d'air (42) pour ledit séchage d'air comprimé, ledit air comprimé séché (A1) étant configuré pour être distribué aux systèmes de véhicule durant un événement d'activation de compresseur, ledit dispositif de séchage d'air comprenant en outre une valve de purge (60) pour la ventilation d'air durant une régénération de la cartouche de séchage d'air (42) au moyen d'air comprimé séché, **caractérisé par** des moyens de détermination de température (110) pour la détermination de la température associée à ladite valve de purge ; des moyens (112) pour la détermination de si ladite température est inférieure à une valeur de température prédéterminée ; des moyens (120) pour la détermination d'un événement d'activation de compresseur ; et des moyens d'exécution de régénération (150) agencés pour exécuter une régénération après un événement d'activation de compresseur déterminé si ladite température est déterminée comme étant inférieure à ladite valeur de température prédéterminée de sorte que l'humidité en connexion avec ladite valve de purge (60) soit éliminée.

8. Système selon la revendication 7, comprenant des moyens de détermination d'humidité (130) agencés pour la détermination du degré d'humidité dans ledit dispositif de séchage d'air (40), dans lequel lesdits moyens d'exécution de régénération (150) sont agencés pour exécuter ladite régénération sur base dudit degré d'humidité déterminé dans ledit dispositif de séchage d'air (40).

9. Système selon la revendication 8, dans lequel lesdits moyens de détermination d'humidité (130) pour la détermination du degré d'humidité dans ledit dispositif de séchage d'air (40) comprennent des moyens pour la détermination d'un temps d'activation de compresseur (122) pour la détermination d'un temps d'activation de compresseur durant un événement d'activation de compresseur ; et des moyens (132) pour la détermination d'une quantité d'air comprimé (A) ayant passé ladite cartouche de séchage d'air (42) durant ledit temps d'activation de compresseur.

10. Système selon la revendication 8 ou 9, comprenant des moyens de détermination (140) pour la détermination d'une quantité d'air comprimé séché (A2) requise durant ladite régénération de sorte que l'humidité en connexion avec ladite valve de purge (60) soit éliminée sur base dudit degré déterminé d'humidité dans ledit dispositif de séchage d'air (40) avant l'exécution de la régénération après un événement d'activation de compresseur, dans lequel lesdits moyens d'exécution de régénération (150) sont agencés pour réaliser ladite régénération de sorte que ladite quantité requise d'air comprimé séché (A2) soit utilisée pour ladite régénération.

11. Système selon la revendication 10, dans lequel lesdits moyens d'exécution de régénération (150) agencés pour exécuter ladite régénération de sorte que ladite quantité requise d'air comprimé séché (A2) soit utilisée pour ladite régénération comprennent : des moyens d'exécution d'événement de régénération (152) pour l'exécution d'un événement de régénération jusqu'à ce que la pression d'air dudit air comprimé séché ait été réduite à un niveau de pression prédéterminé ; des moyens (154) pour la détermination de si ladite quantité requise d'air comprimé séché (A2) a été utilisée ; des moyens (156) pour la fin de ladite exécution de régénération si ladite quantité requise d'air comprimé séché (A2) a été utilisée pour ladite régénération ; et, si ladite quantité requise d'air comprimé séché (A2) n'a pas été utilisée pour ladite régénération, des moyens d'exécution de continuation de régénération (158) comprenant : des moyens (158a) pour la fermeture de ladite valve de purge (60), des moyens d'exécution d'événement d'activation de compresseur (158b) pour l'exécution d'un événement d'activation de compresseur afin d'augmenter la pression dudit air comprimé séché à une pression prédéterminée, et des moyens d'exécution d'événement de régénération (152) pour l'exécution d'un autre événement de régénération jusqu'à ce que la pression d'air dudit air comprimé séché ait été réduite à un niveau de pression prédéterminé ; ladite continuation de régénération étant agencée pour être répétée jusqu'à ce que ladite quantité requise d'air comprimé séché (A2) ait été utilisée pour ladite régénération.

12. Système selon la revendication 10, comprenant des moyens d'adaptation de pression (160) agencés pour, avant l'exécution de ladite régénération et durant un événement d'activation de compresseur, adapter la pression dudit air sec comprimé distribué aux systèmes du véhicule durant ledit événement d'activation de compresseur sur base du temps d'activation dudit événement d'activation de compresseur de sorte que, durant une régénération lorsque ladite pression d'air dudit air comprimé séché a été réduite à un niveau de pression prédéterminé, ladite quantité requise d'air comprimé séché (A2) ait été utilisée pour ladite régénération de sorte que l'humidité en liaison avec ladite valve de purge (60) soit éliminée.

13. Véhicule (1) comprenant un système (II) selon l'une quelconque des revendications 7-12.

14. Programme informatique (P) pour la commande d'un système de traitement d'air (I) d'un véhicule (1), ledit programme informatique (P) comprenant un code programme qui, lorsqu'il est exécuté sur un agencement de commande (100) ou un autre ordinateur (500) connecté à l'agencement de commande (100), amène l'agencement de commande à exécuter les étapes selon les revendications 1-6.

15. Programme informatique comprenant des instructions qui, lorsqu'elles sont exécutées par un ordinateur, amènent l'ordinateur à mettre en œuvre le procédé selon l'une quelconque des revendications 1-6.
